# EUROPÄISCHE PATENTSCHRIFT

(11) **EP 1 625 815 B1**
(45) Veröffentlichungstag und Bekanntmachung des Hinweises auf die Patenterteilung: **12.08.2009**
(21) Anmeldenummer: 04019355.9
(22) Anmeldetag: 14.08.2004
(51) Int. Cl.: A47J 31/40

(54) **Vorrichtung und Verfahren zum Befüllen und Entleeren einer Brühkammer**
Apparatus and method for filling and emtying a brewing chaber
Appareil et procédé pour remplir et vider une chambre à infusion

(43) Veröffentlichungstag der Anmeldung: 15.02.2006
(73) Patentinhaber: MELITTA HAUSHALTSPRODUKTE GmbH & Co. Kommanditgesellschaft, 32427 Minden (DE)
(72) Erfinder: Ruckstuhl, Stephan, 4623 Neuendorf (CH)
(74) Vertreter: Dantz, Jan Henning

(56) Entgegenhaltungen:
- EP-A- 1 306 041
- EP-A- 1 336 365
- EP-A- 1 417 914
- US-A1- 2003 116 026
- US-A1- 2004 060 449
- US-B1- 6 748 850

## Beschreibung

Die vorliegende Erfindung betrifft eine Vorrichtung und ein Verfahren zum Befüllen und Entleeren einer Brühkammer, insbesondere einer Brühkammer eines Kaffeeautomaten.

Es gibt Kaffeeautomaten, bei denen zum Befüllen einer Brühkammer eine Aufnahme vorgesehen ist, in die eine Portionspackung einlegbar ist. Die Aufnahme ist über einen Gehäusedeckel verschließbar, so dass ein manuelles Befüllen und Entleeren der Aufnahme vorgenommen wird. Nachteilig bei dieser Art des Befüllens ist, dass nach jedem Brühvorgang die Portionspackung aus der Aufnahme von Hand herausgenommen werden muss, was gerade beim Brühen mehrerer Kaffeeportionen hintereinander mühsam ist. Erst nach dem manuellen Entleeren kann eine neue Portionspackung eingelegt werden, wobei das Befüllen und Entleeren für den Benutzer vergleichsweise aufwendig ist.

Die EP 1 306 041 offenbart eine Vorrichtung zum Befüllen und Entleeren einer Brühkammer, die zur Aufnahme von Portionspackungen geeignet ist. In einer Ladeposition könne von oben Portionspackungen in die Brühkammer eingefügt werden. Wird über einen Betätigungsmechanismus eine Kurvenführung gedreht, dann verschwenkt die Brühkammer, damit von oben ein Kolben in die Brühkammer zum Brühen von Kaffee eingefügt wird. Anschließend wird dann über die Kurvenführung ein unterer Kolben bewegt, um die in der Brühkammer enthaltenen Portionspackungen von unten auszustoßen, damit diese dann gleich manuell entsorgt wird.

Die US 6,240,32 offenbart eine Kaffeemaschine, bei der eine Brühkammer von oben mit Kaffeekapseln befüllbar ist. Nach dem Befüllen kann die Brühkammer verfahren werden, um dann nach Einfügen einer Brause die Kaffeekapsel mit heißem Wasser zu durchströmen. Die gebrauchte Kapsel kann dann von unten über einen Stößel automatisch ausgestoßen werden.

Die WO 2004/049878 A1 offenbart eine Brühvorrichtung mit einer Brühkammer, die in einer Befüllposition von oben mit Kaffeekapseln befüllbar ist. Die Kaffeekapseln werden in der becherartigen Brühkammer ptatziert. Anschließend wird die Brühkammer zu einer Brause verschwenkt, die von oben auf die Brühkammer aufgedrückt wird. Nach Abschluss des Brühvorgangs werden die benutzten Kaffeekapseln nach einem Verschwenken der Brühkammer in die Befüllposition durch einen Stößel an dem Boden der Brühkammer nach oben ausgestoßen.

Es ist daher Aufgabe der vorliegenden Erfindung eine Vorrichtung und ein Verfahren zum Befüllen und Entleeren einer Brühkammer zu schaffen, bei dem mit wenigen Verfahrensschritten auf einfache Weise ein Befüllen und Entleeren der Brühkammer ermöglicht wird.

Diese Aufgabe wird mit einer Vorrichtung mit den Merkmalen des Anspruches 1 und einem Verfahren mit den Merkmalen des Anspruches 7 gelöst.

Die Vorrichtung weist gemäß der Erfindung eine an einer Seite geöffnete Brühkammer auf, an der ein verschiebbarer Boden angeordnet ist. Der Boden kann dabei zum Entleeren zu einer Öffnung der Brühkammer bewegt werden, sodass eine in der Brühkammer enthaltene Portionspackung automatisch aus dieser entfernt wird und in einen Sammelbehälter herabfallen kann. Dadurch muss der Benutzer die Portionspackung nicht von Hand anfassen, was in der Handhabung als wesentlich angenehmer empfunden wird. Ferner kann die Brühkammer zusammen mit dem Boden verschwenkt werden, sodass die Öffnung von oben mit Portionspackungen befüllbar ist, sodass die entleerte Brühkammer auf einfache Weise mit ein oder mehreren Portionspackungen befüllt werden kann. Der Benutzer muss dabei lediglich die neuen Portionspackungen von oben einlegen und anschließend die Betätigungsmechanik bewegen.

Gemäß einer bevorzugten Ausgestaltung der Erfindung ist die Brühkammer mit der nach oben weisenden Öffnung in der Befüllposition verrastbar. Dadurch kann der Benutzer die Befüllposition so lange beibehalten, bis die Portionspackungen eingelegt sind.

Für eine einfache Betätigung sind der Boden und die Brühkammer über je eine vorzugsweise scheibenförmige Kurvenführung bewegbar. Dabei kann ein Betätigungselement vorgesehen sein, mittels dem sowohl der Boden als auch die Brühkammer bewegbar sind, sodass der Benutzer für die Bewegungsvorgänge lediglich dieses eine Betätigungselement bedienen muss.

Für eine einfache mechanische Ausgestaltung der Betätigungsmechanik ist der Boden mit einem ersten Zapfen gekoppelt und die Brühkammer mit einem zweiten Zapfen gekoppelt, die zusammen an einer drehbaren Kurvenführung gelagert sind. Dadurch kann durch ein Verschwenken des Betätigungselementes zusammen mit der drehbaren Kurvenführung eine entsprechende Bewegung der Brühkammer und des Bodens erreicht werden. Das Betätigungselement kann dabei mit einer Abdeckung gekoppelt sein, die die Brühkammer nur in der zu befüllenden Position freigibt. Sobald die Brühkammer befüllt ist, kann durch Verschwenken des Betätigungselementes und der Abdeckung die Brühkammer von außen verdeckt angeordnet sein.

Bei dem erfindungsgemäßen Verfahren wird zunächst der Boden innerhalb der Brühkammer zu einer Öffnung zum Ausstoßen von bereits gebrauchten Portionspackungen bewegt, bevor der Boden in die Brühkammer zur Ausbildung einer tassenförmigen Brühkammer eingezogen wird. Anschließend wird die Brühkammer derart verschwenkt, dass die Öffnung der Brühkammer von oben zugänglich ist, damit ein oder mehrere Portionspackungen eingefügt werden können. Dann wird die Brühkammer zu einer Brause verschwenkt, die die Öffnung der Brühkammer überdeckt, damit ein Brühvorgang eingeleitet werden kann. Das erfindungsgemäße Verfahren ermöglicht ein automatisches Entleeren der Brühkammer und ermöglicht eine einfache Handhabung, bei der die tassenförmige Brühkammer nur von oben befüllt werden muss.

Vorzugsweise wird die Brühkammer nach dem Brühvorgang zunächst von der Brause wegbewegt und der Boden in der Brühkammer gegenläufig verschoben, wobei beide Bewegungen auch gleichzeitig ausgeführt werden können. Die Bewegung der Brühkammer weg von der Brause hat den Vorteil, dass die enthaltenen Portionspackungen nach unten in einen Sammelbehälter abfallen können.

Die Erfindung wird nachfolgend anhand eines Ausführungsbeispiels mit Bezug auf die beigefügten Zeichnungen näher erläutert. Es zeigen:
- Figur 1: eine geschnittene Seitenansicht eines Kaffeeautomaten mit einer Vorrichtung zum Befüllen und Entleeren einer Brühkammer; und
- Figuren 2-5: je perspektivische Ansichten der Vorrichtung zum Befüllen und Entleeren der Brühkammer in verschiedenen Verfahrenspositionen.

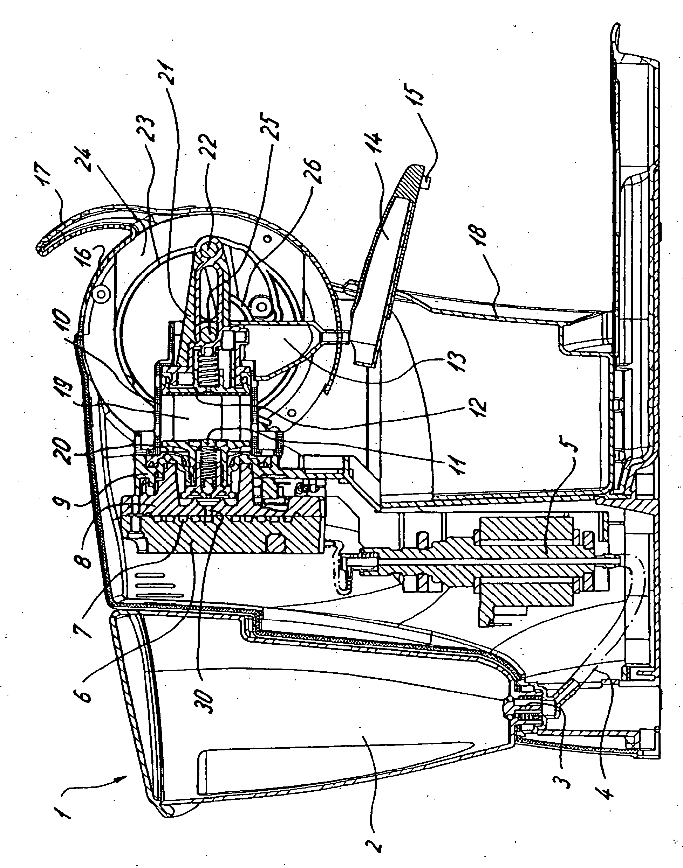

Ein in Figur 1 gezeigter Kaffeeautomat 1 umfasst einen Vorratsbehälter 2 für Frischwasser, an dem ein Auslassventil 3 vorgesehen ist, das über eine Leitung 4 mit einer Pumpe 5 verbunden ist. Mittels der Pumpe 5 lässt sich das Wasser zu einer Heizplatte 6 führen, in der spiralförmige Durchgänge 7 ausgebildet sind, in denen das Wasser erhitzt werden kann. Benachbart ist eine Platte 8 vorgesehen, die Teil einer Brause bildet und in der eine Zuleitung 30 für das erhitzte Wasser vorgesehen ist. An der Platte 8 ist eine Halterung 9 für ein Dichtelement 20 montiert, das im Wesentlichen ringförmig ausgebildet ist und in dem mittig eine Düse 11 vorgesehen ist. Über die Düse 11 kann das erhitzte Wasser in eine Brühkammer 19 einströmen, die von einem Gehäuse 10 umgeben ist. Auf der gegenüberliegenden Seite der Düse 11' ist ein Boden 12 zur Begrenzung der Brühkammer 19 vorgesehen, in dem ein Abfluss ausgebildet ist, sodass das gebrühte Fluid durch einen trichterförmigen Auslass 13 zu einem Ausleger 14 strömt, an dem eine Auslassöffnung 15 zur Befüllung von Kaffeetassen vorgesehen ist.

Der Kaffeeautomat 1 umfasst eine Brühkammer 19, in der ein oder mehrere Portionspackungen mit Kaffee einfügbar sind. Hierfür ist eine zylindrische Abdeckung 16 vorgesehen, an der ein Griff 17 ausgebildet ist, über den das Gehäuse 10 über eine Betätigungsmechanik von der Brause gelöst und verschwenkt werden kann, sodass die Brühkammer 19 von oben befüllt wird. Anschließend wird die Abdeckung 16 verschlossen und das Gehäuse 10 in die gezeigte Position bewegt. Nach dem Brühvorgang werden dann die Portionspackungen in einen Sammelbehälter 18 entleert, um die Brühkammer 19 erneut zu befüllen, wie dies nachfolgend noch im Detail erläutert wird.

Die Vorrichtung zum Befüllen und Entleeren der Brühkammer 19 umfasst einen mit dem Boden 12 gekoppelten Ausleger 21, an dem ein Zapfen 22 festgelegt ist. Der Zapfen 22 ist endseitig in einer Kurve 23 einer Kurvenführung 24 gelagert. Auf ähnliche Weise ist das Gehäuse 10 der Brühkammer 19 mit einem Zapfen 25 gekoppelt, der fix im Zentrum der scheibenförmigen Kurvenführung 24 gelagert ist. In Figur 1 ist nur die scheibenförmige Kurvenführung 24 an einer Seite dargestellt, wobei für eine gleichmäßige Führung eine spiegelsymmetrische Kurvenführung auch an der gegenüberliegenden Seite der Zapfen 22 und 25 vorgesehen ist.

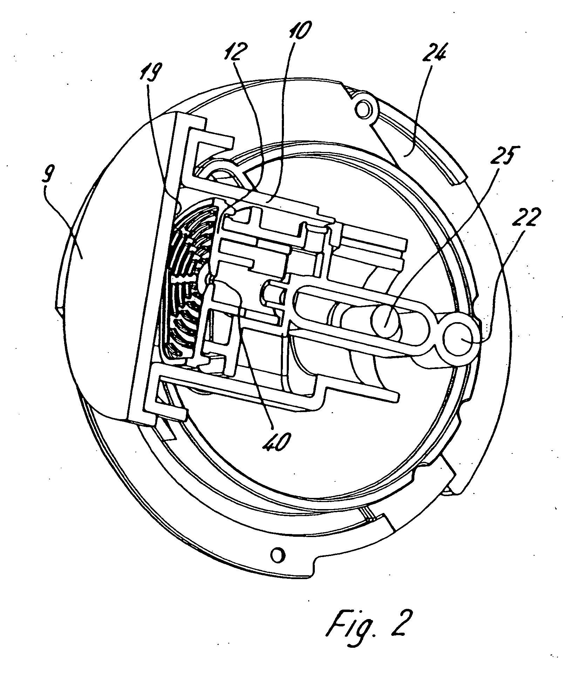

Das Befüllen und Entleeren der Brühkammer 19 wird mit Bezug auf die Figuren 2 bis 5 näher erläutert.

In Figur 2 befindet sich die Brühkammer 19 in der Brühposition, wobei aus Gründen der Übersichtlichkeit keine Portionspackung in der Brühkammer 19 dargestellt ist. Die Brühkammer 19 wird durch das Gehäuse 10, den Boden 12 sowie die schematisch dargestellte Brause 9 bzw. Düse 11 begrenzt. Die Portionspackung ist dabei im Wesentlichen formschlüssig in der Brühkammer 19 aufgenommen, um einen Bypass durch Strömungsspalte während des Brühens zu vermeiden. Nach der Extraktion strömt das Fluid durch einen Ablauf 40 zu dem Trichter 13.

In der Brühposition befindet sich die Abdeckung 16 so an einem Gehäuse des Kaffeeautomaten 1, dass die Brühkammer 19 mit dem Gehäuse 10 verdeckt angeordnet ist. In Figur 2 ist sowohl die Position beim Beginn des Brühens als auch nach dem Brühen dargestellt, wenn die gebrauchte Portionspackung noch in der Brühkammer 19 verbleibt.

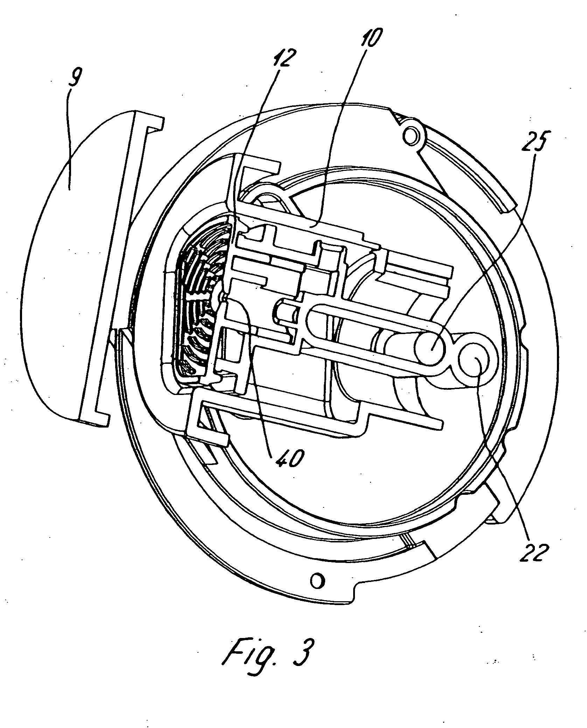

In Figur 3 ist die Position gezeigt, in der die Portionspackung aus der Brühkammer 19 ausgeworfen wird. Hierfür bewegt sich der Boden 12 aufgrund eines Verschwenkens des Betätigungselementes 17 mit der Abdeckung 16 und entsprechend den Kurvenführungen 24 mittels entsprechenden, hier nicht speziell dargestellten Federelementen oder anderen Vorrichtungen zu der Öffnung der Brühkammer 19, sodass innerhalb der Brühkammer 19 kein Platz mehr für die Portionspackung bleibt. Durch die Schwenkbewegung des Betätigungselementes 17 wird gleichzeitig das Gehäuse 10 der Brühkammer weg von der Brause 9 bzw. der Düse 11 bewegt, sodass zwischen Gehäuse 10 und Brause 9 ein Spalt ausgebildet wird, durch den die gebrauchte Portionspackung in den Sammelbehälter 18 herunterfallen kann.

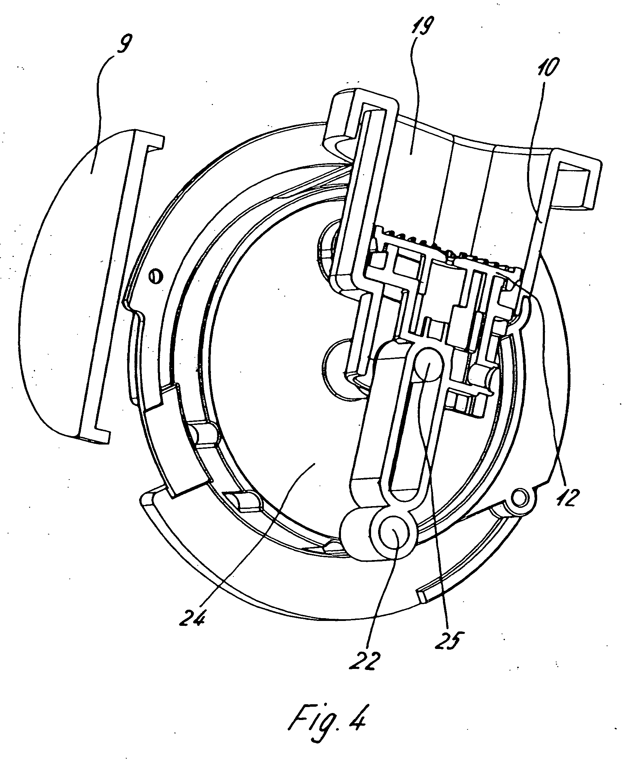

Um die Brükammer 19 zu befüllen, wird das Betätigungselement 17 weiter gedreht, wodurch die in Figur 4 gezeigte Position erreicht wird. Durch das weitere Verschwenken des Betätigungselementes 17 wurde einerseits der Boden 12 wieder über den Zapfen 22 sowie eine feststehende Kurvenrippe in die Brühkammer 19 eingezogen, sodass diese eine tassenförmige Aufnahme für neue Portionspackungen bildet. Andererseits wurde das Gehäuse 10 mit der Brühkammer 19 derart verschwenkt, dass die Öffnung der Brühkammer 19 nach oben weist und von dort auf einfache Weise mit neuen Portionspackungen befüllt werden kann.

Durch das Verschwenken des Betätigungselementes 17 wurde auch die Abdeckung 16 von dem oberen Bereich entfernt, sodass die Öffnung der Brühkammer 19 freigegeben ist. In dieser Position kann das Betätigungselement 17 verrastet werden, damit die Brühkammer 19 in Ruhe befüllt werden kann.

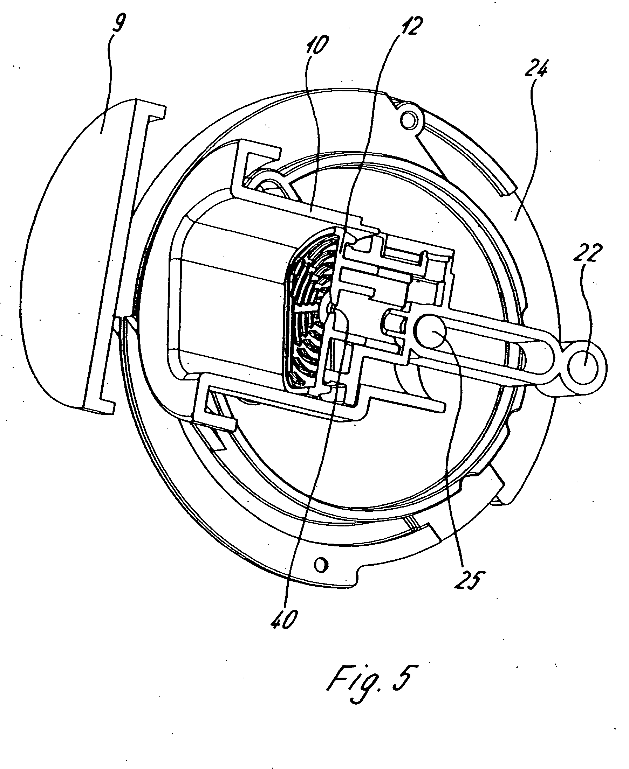

Für einen weiteren Brühvorgang wird dann das Betätigungselement 17 wieder zurückgeschwenkt, wie dies in Figur 5 dargestellt ist. In einem ersten Schritt wird dadurch das Gehäuse 10 der Brühkammer 19 wieder in eine im Wesentlichen horizontale Lage verschwenkt, in der die Öffnung der Brühkammer 19 der Brause 9 gegenüberliegt. Der Boden 12 bleibt in der eingezogenen Position und bietet den Portionspackungen ausreichend Platz in der Brühkammer 19.

Wenn das Betätigungselement 17 von der in Figur 5 gezeigten Stellung weiter verschwenkt wird, befindet sich die Brühkammer 19 wieder in der in Figur 2 gezeigten Position, wobei die Abdeckung 16 das Gehäuse 10 überdeckt und der Boden 12 formschlüssig an der Portionspackung anliegt. Ferner ist das Gehäuse 10 abgedichtet an der Brause 9 angeordnet, damit der nächste Brühvorgang ausgeführt werden kann.

In dem dargestellten Ausführungsbeispiel ist durch die Schwenkbewegung eines Betätigungselementes 17 die Brühkammer 19 sowie der Boden 12 in der gewünschten Weise bewegbar. Es ist auch möglich, statt der gezeigten Kurvenführungen 24 auch andere mechanische Mittel einzusetzen, beispielsweise Hebel, Schieber, Zahnräder etc, um die gewünschte Bewegung der Brühkammer und des Bodens auszuführen.

Für das Befüllen und Entleeren ist es selbstverständlich, dass die Befüllposition keine exakte Ausrichtung der Öffnung in die vertikale Richtung erfordert, sondern dass die Öffnung nur im Wesentlichen nach oben gerichtet sein muss, um auf einfache Weise befüllt werden zu können. Auch die Brühposition muss nicht exakt horizontal ausgerichtet sein, es ist lediglich erforderlich, dass die Brause 11 und die Brühkammer 19 eine abgedichtete Einheit ausbilden.

Ferner kann das Betätigungselement 17 in die geschlossene Position vorgespannt sein, um ein leichtgängiges Schließen zu ermöglichen und zu verhindern, dass die Abdeckung 16 nur unvollständig verschossen wird. Die Prüfung der geschlossenen Position der Brühkammer könnte auch über einen Sensor erfasst werden, um zu verhindern, dass der Brühvorgang bei teilweise geöffneter Brühkammer eingeleitet wird.

## Patentansprüche

1. Vorrichtung zum Befüllen und Entleeren einer Brühkammer (19), mit einer an einer Seite geöffneten Brühkammer (19), die von einem Gehäuse (10) und einem Boden (12) umgeben ist, wobei der Boden (12) in dem Gehäuse (10) verschiebbar ausgebildet ist, wobei der Boden (12) zum Entleeren zu einer Öffnung der Brühkammer (1) bewegbar ist, wobei die Brühkammer (19) zusamnen mit dem Gehäuse (10) und dem Boden (12) derart verschwenkbar ist, (dass die Öffnung von oben mit Portionspackungen befüllbar ist, wobei nur ein Betätigungselement (17) vorgesehen ist, mittels dem sowohl der Boden (12) als auch die Brühkammer (19) bewegbar sind, und der Boden (12) mit einem ersten Zapfen (22) gekoppelt ist, der über eine drehbare Kurvenführung (24) gleitet und bewegt wird und die Brühkammer (19) auf einem zweiten Zapfen (25) sowie im Zentrum der Kurvenführung (24) gelagert ist, **dadurch gekennzeichnet , dass** für einen Brühvorgang das Gehäuse (10) in eine horizontale Lage verschwenkbar ist, in der die Öffnung der Brühkammer (19) der Brause (9) gegenüberliegt und zum Auswerfen einer Portionspackung aus der Brühkammer (19) der Boden (12) zu der Öffnung der Brühkammer (19) und das Gehäuse (10) weg von einer Brause (9) bewegbar ist, so dass zwischen Gehäuse (30) und Brause (9) ein Spalt ausgebildet wird, durch den die gebrauchte Portionspackung in einen Sammelbehälter (18) herunterfallen kann.

2. Vorrichtung nach Anspruch 1, **dadurch gekennzeichnet, dass** die Brühkammer (19) mit der nach oben weisenden Öffnung in der Befüllposition verrastbar ist.

3. Vorrichtung nach Anspruch 1 oder 2, **dadurch gekennzeichnet, dass** der Boden (12) und die Brühkammer (19) über einen Drehpunktzapfen (25) sowie eine Kurvenführung (26) bewegbar sind.

4. Vorrichtung nach einem der Ansprüche 1 bis 3, **dadurch gekennzeichnet, dass** das Betätigungselement (17) zusammen mit der drehbaren Kurvenführung (24) verschwenkbar ist.

5. Vorrichtung nach einem der Ansprüche 1 bis 4, **dadurch gekennzeichnet, dass** das Betatigungsciement (17) mit einer Abdeckung (16) gekoppelt ist, die die Brühkammer (19) in der zu befüllenden Position freigibt.

6. Vorrichtung nach einem der Ansprüche 1 bis 5, **dadurch gekennzeichnet, dass** der Boden (12) über eine Feder bewegbar gehalten ist.

7. Verfahren zum Befüllen und Entleeren einer Brühkammer, mit den folgenden Schritten:
- Einziehen des Bodens (12) in die Brühkammer (19) zur Ausbildung einer tassenförmigen Brühkammer:
- Verschwenken der Brühkammer (19) in eine vertikale Befüllposition, in der die Öffnung der Brühkammer (19) von oben zugänglich ist;
- Einfügen von ein oder mehreren Portionspackungen in die Brühkammer (19);
- Verschwenken der Brühkammer (19) für einen Brühvorgang in eine im Wesentlichen horizontale Lage, in der die Öffnung der Brühkammer (19) einer Brause (9) gegenüberliegt: und
- Bewegen eines Bodens (12) innerhalb der Brühkammer (19) zu einer Öffnung zum Ausstoßen von bereits gebrauchten Portionspackungen, und Bewegen eines Gehäuses (10) der Brühkammer (19) weg von einer Brause(9), so dass zwischen Gehäuse (10) und Brause (9) ein Spalt ausgebildet wird, durch den die gebrauchte Portionspackung in einen Sammelbehälter (18) herunterfallen kann.

8. Verfahren nach Anspruch 7, **dadurch gekennzeichnet, dass** die Brühkammer (19) nach dem Brühvorgang zunächst von der Brause (11) wegbewegt wird und der Boden (12) in der Brühkammer (19) gegenläufig verschoben wird.

9. Verfahren nach Anspruch 7 oder 8, **dadurch gekennzeichnet, dass** durch eine Bewegung des Bodens (12) das Volumen der Brühkammer (19) automatisch der eingelegten Kaffeemenge angepasst wird.

## Claims

1. Device for filling and emptying a brewing chamber (19), with a brewing chamber (19) which is open at one side and which is surrounded by a housing (10) and a base (12), wherein the base (12) is constructed to be displaceable in the housing (10), wherein, for emptying, the base (12) is movable towards an opening of the brewing chamber (19), wherein the brewing chamber (19) together with the housing (10) and the base (12) is pivotable in such a manner that the opening is fillable from above with portion packages, wherein only one actuating element (17) is provided, by means of which not only the base (12), but also the brewing chamber (19) are movable, and the base (12) is coupled with a first pin (22) which is slid and moved by way of a rotatable cam guide (24) and the brewing chamber (19) is mounted on a second pin (25) as well as in the centre of the cam guide (24), **characterised in that** the housing (10) is, for a brewing process, pivotable into a horizontal position in which the opening of the brewing chamber (19) is opposite a sprinkler (9) and for ejection of a portion package from the brewing chamber (19) the base (12) is movable towards the opening of the brewing chamber (19) and the housing (10) away from the sprinkler (9) so that a gap through which the used portion package can drop down into a collecting container (18) is formed between the housing (10) and the sprinkler (9).

2. Device according to claim 1, **characterised in that** the brewing chamber (19) is detentable in the filling position with the upwardly facing opening.

3. Device according claim 1 or 2, **characterised in that** the base (12) and the brewing chamber (19) are movable by way of a fulcrum pin (25) as well as a cam guide (26).

4. Device according to any one of claims 1 to 3, **characterised in that** the actuating element (17) is pivotable together with the rotatable cam guide (24).

5. Device according to any one of claims 1 to 4, **characterised in that** the actuating element (17) is coupled with a lid (16) which frees the brewing chamber (19) in the position for filling.

6. Device according to any one of claims 1 to 5, **characterised in that** the base (12) is mounted by way of a spring to be movable.

7. Method of filling and emptying a brewing chamber, comprising the following steps:
- drawing of the base (12) into the brewing chamber (19) for formation of a cup-shaped brewing chamber (19);
- pivotation of the brewing chamber (19) into a vertical filling position in which the opening of the brewing chamber (19) is accessible from above;
- insertion of one or more portion packages into the brewing chamber (19);
- pivotation of the brewing chamber (19), for a brewing process, into a substantially horizontal position in which the opening of the brewing chamber (19) is opposite a sprinkler (9); and
- movement of a base (12) within the brewing chamber (19) towards an opening for ejection of already used portion packages and movement of a housing (10) of the brewing chamber (19) away from the sprinkler (9) so that a gap through which the used portion package can drop down into a collecting chamber (18) is formed between the housing (10) and the sprinkler (9).

8. Method according to claim 7, **characterised in that** the brewing chamber (19) is, after the brewing process, initially moved away from the sprinkler (11) and the base (12) is displaced in opposite sense in the brewing chamber (19).

9. Method according to claim 7 or 8, **characterised in that** the volume of the brewing chamber (19) is automatically adapted to the inserted quantity of coffee by a movement of the base (12).

## Revendications

1. Dispositif pour remplir et vider une chambre à infusion (19) qui s'ouvre d'un côté, cette chambre étant entourée par un boîtier (10) et un fond (12), le fond (12) est coulissant dans le boîtier (10), le fond (12) est mobile vers une ouverture de la chambre à infusion (19) pour vider, la chambre à infusion (19) et le boîtier (10) ainsi que le fond (12) peuvent être pivotés pour que l'ouverture puisse être remplie par le dessus avec des doses emballées, seul un élément d'actionnement (17) est prévu qui permet de déplacer à la fois le fond (12) et la chambre à infusion (19), le fond (12) est couplé à un premier goujon (22) qui glisse et se déplace sur un premier chemin de came (24) de rotation, et la chambre à infusion (19) est montée sur un second tourillon (25) au centre du chemin de came (24),
**caractérisé en ce que** pour une opération d'infusion, on pivote le boîtier (10) dans une position horizontale dans laquelle l'ouverture de chambre à infusion (19) est en regard de la douchette (9) et pour éjecter une dose emballée hors de la chambre à infusion (19) on déplace le fond (12) par rapport à l'ouverture de la chambre à infusion (19) et le boîtier (10) pour l'écarter de la douchette (9) de façon à former un intervalle entre le boîtier (10) et la douchette (9) à travers lequel la dose emballée, épuisée, peut tomber dans un réceptacle (18).

2. Dispositif selon la revendication 1,
**caractérisé en ce que** la chambre à infusion (19) peut être verrouillée dans la position de remplissage avec son ouverture tournée vers le haut.

3. Dispositif selon la revendication 1 ou 2,
**caractérisé en ce que** le fond (12) et la chambre à infusion (19) peuvent être déplacés par l'intermédiaire d'un tourillon formant pivot (25) et d'un chemin de came (26).

4. Dispositif selon l'une des revendications 1 à 3,
**caractérisé en ce que** l'élément d'actionnement (17) peut être pivoté avec le chemin de came (24) pivotant.

5. Dispositif selon l'une des revendications 1 à 4,
**caractérisé en ce que** l'élément d'actionnement (17) est couplé à un couvercle (16) qui libère la chambre à infusion (19) dans la position de remplissage.

6. Dispositif selon l'une des revendications 1 à 5,
**caractérisé en ce que** le fond (12) est mobile par l'intermédiaire d'un ressort.

7. Procédé de remplissage et de guidage d'une chambre à infusion comprenant les étapes suivantes :
- rentrer le fond (12) dans la chambre à infusion (19) pour avoir une chambre à infusion en forme de tasse,
- pivoter la chambre à infusion (19) dans une position verticale de remplissage dans laquelle l'ouverture de la chambre à infusion (19) est accessible par le dessus,
- introduire une ou plusieurs doses emballées dans la chambre à infusion (19),
- pivoter la chambre à infusion (19) pour une opération d'infusion dans une position pratiquement horizontale, dans laquelle l'ouverture de la chambre à infusion (19) est en regard d'une douchette (9),
- déplacer le fond (12) dans la chambre à infusion (19) vers une ouverture pour expulser les doses emballées, déjà épuisées, et déplacer le boîtier (10) de la chambre à infusion (19) pour l'écarter de la douchette (9) de façon à former un intervalle entre le boîtier (10) et la douchette (9) à travers lequel la dose emballée, épuisée, peut tomber dans un réceptacle (18).

8. Procédé selon la revendication 7,
**caractérisé en ce qu'** après la phase d'infusion, on déplace tout d'abord la chambre à infusion (19) pour l'écarter de la douchette (9) et on déplace le fond (12) de la chambre à infusion (19) dans des directions opposées.

9. procédé selon la revendication 7 ou 8,
**caractérisé en ce qu'** en déplaçant le fond (12) on adapte automatiquement le volume de la chambre à infusion (19) à la quantité de café introduite.
